Europäisches Patentamt

European Patent Office

Office européen des brevets

(11) Publication number: **0 390 009**
**A1**

## (12) EUROPEAN PATENT APPLICATION

(21) Application number: 90105671.3

(22) Date of filing: 26.03.90

(51) Int. Cl.5 **G01N 27/82, G01N 21/88,**
**G01N 29/04, B21C 51/00**

(30) Priority: 29.03.89 SE 8901086
14.12.89 SE 8904217

(43) Date of publication of application:
03.10.90 **Bulletin 90/40**

(84) Designated Contracting States:
**DE FR GB IT**

(71) Applicant: **ASEA BROWN BOVERI AB**

**S-721 83 Västeras(SE)**

(72) Inventor: **Gustafsson, Bo**
**Spinnfiskargatan 55**
**S-723 48 Västeräs(SE)**

(74) Representative: **Boecker, Joachim, Dr.-Ing.**
**Rathenauplatz 2-8**
**D-6000 Frankfurt a.M. 1(DE)**

(54) **Manipulator for transducers (Detectors).**

(57) Manipulator for transducers (detectors) for indication of cracks and the like on hot blanks, such as slabs and blooms, said transducers being movable across or along the blank. According to the invention the transducer (11) is driven across or along the blank (2) by means of a carriage, a slide, or other transducer carrier means (13) which is placed inside or adjacent to a tube (4) extending across or along the blank and being raisable and lowerable relative to the blank.

Fig. 1a

Fig. 1

The invention relates to a manipulator for transducers (detectors) according to the precharacterising part of claim 1.

In crack indication of hot blanks, normally the greatest possible coverage of the surface to be scanned is aimed at, preferably a 100 percent coverage.

Transducer manipulators for on-line crack indication and the like on hot blanks operate in an unfavourable environment and are therefore provided with extensive means for heat radiation protection, normally water-cooling means. This results in high weights of the movable structure.

A plurality of manipulator solutions are known, most of them based on one or more rotating or oscillating self-oscillating transducers.

Examples of transducers that may be used in this connection are disclosed in EP-B-140 895 or in SE 436 228 (8206678-8).

The invention aims at developing a manipulator for transducers (detectors) of the above-mentioned kind in which the weight of the parts which are to be moved in an oscillating pattern across the surface of the test object is as small as possible so that these parts can be quickly accelerated and decelerated while at the same time the heat- and dust-sensible components of the transducer manipulator are well protected from the unfavourable environment that prevails when scanning a hot blank.

To achieve this aim the invention suggests a manipulator for transducers (detectors) according to the introductory part of claim 1, which is characterized by the features of the characterizing part of claim 1.

Further developments of the invention are characterized by the features of the additional claims.

By locating the movable transducer carrier in a raisable and lowerable tube and providing the tube with a slit, in which the supporting arm for the transducer is able to run, the weight of the parts that have to be moved can be kept low, and a good environment can be created for signal cables and the like, while all the time the manipulator with the transducer can be placed near the hot surface of the strand.

The slit may be movable and/or sealed and the transverse tube be double-sheathed and water-cooled. In one embodiment a single transducer might be used, which is to be able to detect longitudinal cracks down to a length of about 50 mm.

In a manipulator according to the invention high speeds and short turning distances (deceleration-stop-acceleration) may be imparted to the transducer. This leads to a good degree of coverage of the scanned surface, also with small diameters of the transducer coil.

The advantages of the manipulator according to the invention are many. For example, less costly and less complicated manipulators, based on single coil scanning, may be used, which reduces the total price of detecting equipment, especially for equipment which is only intended to detect longitudinal cracks. The manipulator according to the invention is excellently well suited for detection on the upper side and the lower side of a hot blanks, for example slabs, blooms and, possibly, billets. As a result of the fact that the movable weight can be kept low, shorter turning distances (e.g. about 2 dm) for the moving transducer are obtainable despite the high speed (e.g. 3 m/s) at which it moves above the surface of the blank. The blank may have been obtained by continuous casting and/or rolling and may have passed the transducer detector on a roller conveyor.

As means of propulsion for the transducer may be used, for examples, a chain-driven carriage or another alternative arrangement, such as a slide, or any other means of propulsion, which in its entirety is placed inside said double-sheathed, water-cooled tube. The tube, in turn, is provided with an outer efficient insulating layer behind a thin heat-resistant sheet metal covering. Other embodiments of the tube extending transversely to the moving direction of the blank may, of course, also be used. In this way the temperature variations inside said tube between an instant when casting is in progress and an instant when casting is not in progress, are reduced. To prevent the penetration of dust and other dirt into the space for the propulsion device and the cable arrangement, the slit through which the supporting arm (bracket) of the transducer passes, may be covered with a sheet metal strip movably arranged in special low friction slots. The closed space thus created is connected to, for example, a compressed air source via a pressure reducing valve, whereby a limited overpressure can be created in the tube.

Between the movable and the fixed part, signal transmission takes place by means of a flat cable (strip cable) to ensure a constant random capacitance between the conductors when rolling in and out the cable.

By way of example, the invention will now be described in greater detail with reference to the accompanying drawings showing in

Figures 1 an embodiment of a manipulator according to the invention seen in the direction of movement of the blank to be scanned,

Figures 1a the transducer-carrying tube in Figure 1 in cross section at an enlarged scale,

Figure 2 the same manipulator as in Figure 1 in cross section seen from a second side,

Figure 3 the same manipulator in cross section seen from above,

Figure 4 an alternative embodiment,

Figure 5 one of the two erection structures used in the embodiment of Figure 4,

Figure 6 the transducer manipulator of Figure 4 in more detail,

Figure 7 the mobility range of the transducer manipulator.

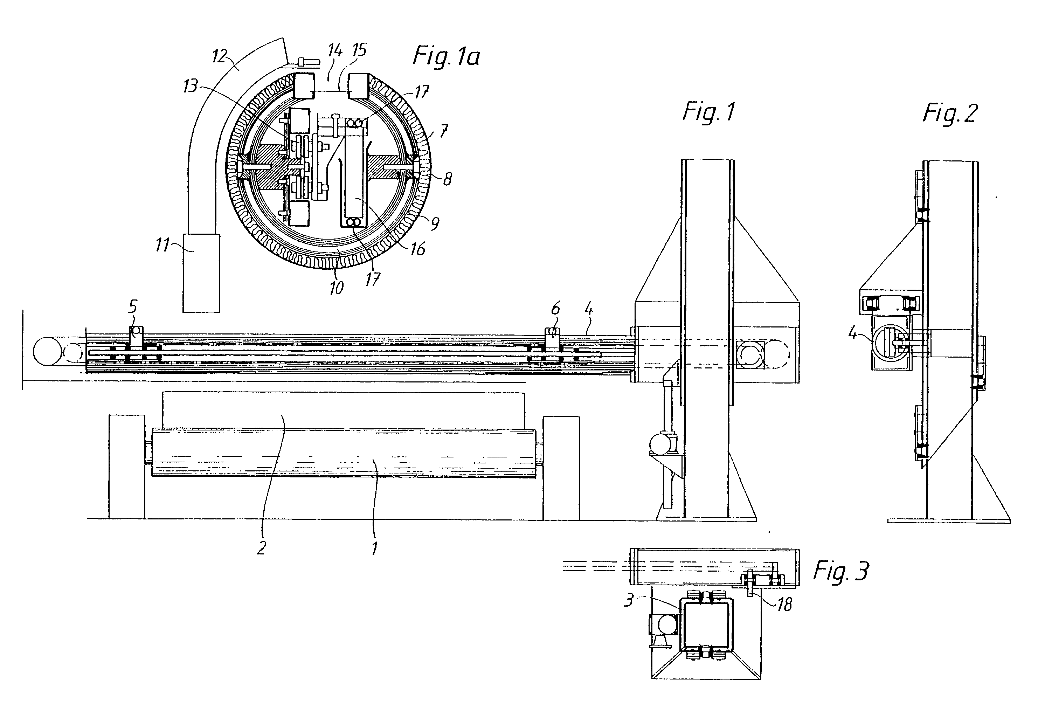

Figure 1 shows a roller conveyor 1 with a continuously cast or rolled blank 2, which is hot and is to pass through the transducer arrangement. At the side of the roller conveyor 1 there is placed a supporting leg 3, which supports a tube 4 which extends transversely to the moving blank 2 and is raisable and lowerable with the help of the supporting leg 3. Figure 1 shows two positions 5, 6 for a transducer, which may be of the kind exemplified above.

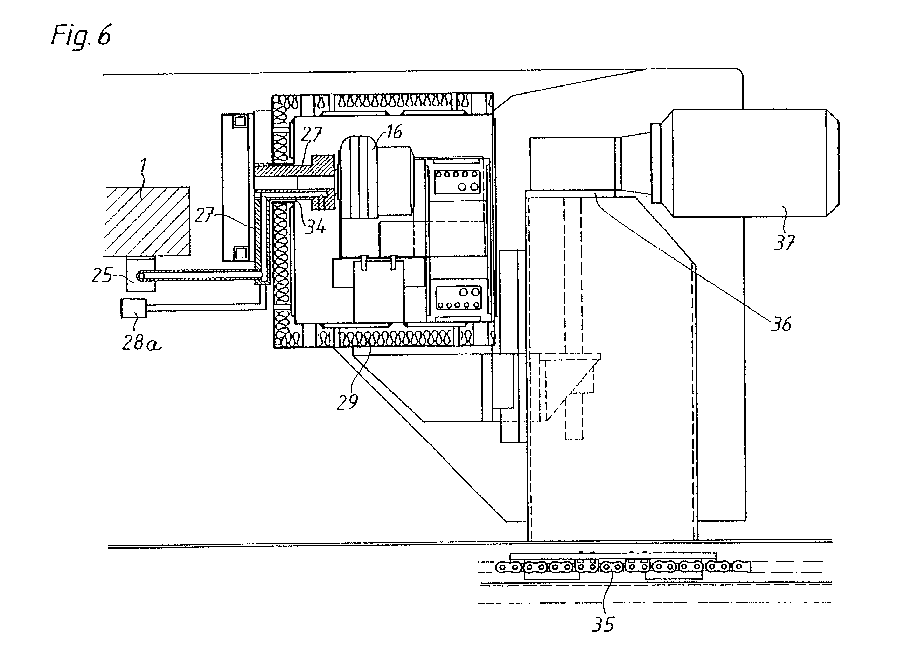

Figure 1a shows details of this arrangement. It shows a double-walled tube consisting of an outer heat-resistant plate 7. Inside the plate there is arranged an insulating layer 8 and inside of this a double-sheathed cooling tube 9 for cooling water 10. The transducer 11 is arranged close to the hot blank 2. By means of a supporting arm (tube and/or cable) 12 the transducer 11 is connected to a carriage or other means of propulsion 13, placed inside the double-walled cooled tube 9. The supporting arm 12 passes through a slit 14 in the tube 9, which slit faces away from the hot blank 2. This makes it possible to construct the whole movable portion of the arrangement with a very low weight. The slit 14 can be supplemented with a protective strip 15, which is intended to prevent the penetration of dirt and the like into the tube space which accommodates the carriage 13 and signal devices. From the transducer 11 a flat cable (strip cable) 16 and a cooling water hose 17 are drawn. The covering strip 15 may be designed movable, for example in the form of an endless belt which accompanies the transducer 11 during its movements and is placed in low friction packings. The entire arrangement according to Figure 1a may be rotated 180° so that it arrives under the blank 2 (see Figure 6) and is thus able to scan the under side of the blank 2, for example between two rollers 1. The transducer 11 is adapted to pass across the blank 2 at great speed and to turn within short distances over the surface of the blank 2 despite its high speed. The scanning path on the surface thus takes on the shape of a zigzag pattern.

Figure 3 shows the supporting leg 3 seen from above and a shaft pin 18 which is joined to a driving motor, suitably positioned at an angle of 90° to the tube 4. The double-sheathed supporting tube 4 is also shown in Figure 2.

In the event (see Figure 3) that the drive equipment comprises an electric motor/gear box/gear wheel, this is placed at one end of the tube and rotated 90° in relation to the tube. A tube with drive equipment is applied to the supporting leg via a raisable and lowerable bracket, the lifting machinery of which is adapted such that three functions can be performed by the same, namely:

1. Adaptation to the blank thickness

2. Adjustment of the working range

3. Rear end passage/emergency lifting situations.

The manipulator may be a general carrier of different transducer types, thus not necessarily the ones exemplified above. As mentioned above, the transducer may be placed under the strand for scanning the underside thereof. Different propulsion arrangements can be used, and by adaptation of the length of stroke and the frequency at which the carriage continuously passes across the blank a manipulator of the same basic design can be used also for other types of blanks than slabs, for example blooms. Also billets can be used by adaptation and optimization of the driving mechanism with respect to the smaller size.

As an alternative design it may be mentioned that the slit 14 in the transverse tube 4 may be covered with a ceramic layer (not shown in the figures), the transducer being placed inside this tube, shielded by the ceramic layer. This ceramic layer may suitably be cooled by liquid or gas. The slit with the ceramic layer then faces, of course, towards the hot blank.

Another alternative is to place a height adjustment device for the transducer 11 on the carriage 13, in which case the movable weight for adjusting the working range is limited to the transducer 11 with its supporting arm 12.

As already indicated, an alternative embodiment of the invention is characterized in that the transducer is movable along the blank by means of a carriage, a slide or any other transducer carrier, which is place inside or adjacent to a tube which extends along the blank and is raisable and lowerable relative to the blank.

A detector transducer which moves along the edge of a test object, such as a blank, is less sensitive to where the coil is located in relation to the edge.

In the carrier arm design described above, the tube can be provided with a slit in which the carrier arm for the transducer is able to run, and the movable weight can be kept low. In addition, a good environment can be created for signal cables, electronic equipment etc., the manipulator and the transducer being all the time placed near the hot strand. Also in this case, the slit may be movable and/or sealed, and the tube may be double-sheathed and water-cooled. However, it would also be possible to use a design in which, instead of double sheathing, cooling is arranged by means of welded-on channels.

The transducer should be made movable along a limited distance, for example inside the space between two rollers in a roller conveyor, for example about 0.8 m. The limitation is due to scanning being performed on the lower side of the blank as well.

In a device according to this alternative, high speeds and short turning distances (deceleration-stop-acceleration) may be imparted to the transducer. which results in a good degree of coverage of the scanned surface also with small dimensions of the coil in the transducer.

In addition to the extra advantages derived by using a device according to this alternative, the advantages are also substantially the same as those with a device according to Figures 1-3. It may be mentioned that less costly and less complicated manipulators, based on single coil scanning, can be used. which reduces the total price of detection equipment, in particular for equipment which is only intended to detect longitudinal cracks. The described manipulator is excellently well suited for detection on the upper side and the lower side of a hot blank. As examples of blanks may be mentioned slabs, blooms and possibly also billets. Accordingly, the movable weight can be kept low in order thus to allow short turning distances (e.g. about 2 dm) despite the high speed (e.g. 3 m/s) of the transducer above the blank surface. The blank may have been obtained by continuous casting and/or rolling and may be passed through the detector on a conveyor roller.

In a further preferred embodiment of the invention, the transducer is placed on a carrier arm, for example an angled arm. mounted on a turning device for turning this arm, for example through 180°, for scanning the lower side or, alternatively, the upper side of the blank. The turning device is suitably mounted on a carriage inside the tube or a guide at the tube. The same transducer can be used, after a simple turning movement, for scanning the upper and lower sides, respectively, of the blank. In this way, a complete manipulator transducer may be dispensed with.

By locating the pivot centre on a level with the centre of the blank, the transducer will rapidly adopt a suitable lift-off (LO) distance for a new measuring sequence when shifting between the upper and the lower side of the blank. The switching can be performed while the transducer of the other side is active, and the transducer which is to start operating stands by when the transducer which is to stop op erating has completed the measuring. This results in a high total effective measuring time despite the use of several different transducers. The reciprocating movement may be limited, for example to the distance between two subsequent rollers in the roller conveyor, for example 0.8 m.

A further embodiment comprises adding an additional transducer detector, placed on the transducer arm and angled forwards towards the blank. It is then intended to scan the surface on the short side of the blank.

Certain functions of the electronics system for the transducer manipulator are suitably accommodated inside the tube. Such a system can be used for two or all of the transducers by providing the system with switches.

The manipulator tube which is raisable and lowerable with a special lifting device can be placed on a plate, which in turn can be positioned very exactly in a direction facing or facing away from the edge of the blank to ensure accurate edge tracking.

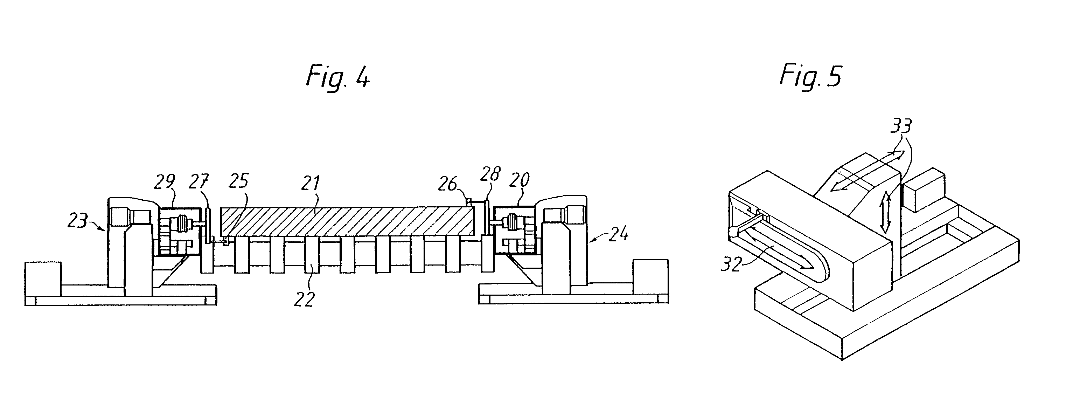

Figure 4 shows a blank 21 which is transported on a roller conveyor 22. At each side of the blank 21 there are transducer manipulators. one of which. 23, being adjusted for scanning the lower side and the other, 24. being adjusted for scanning the upper side of the blank. The transducers on the manipulators are adapted to scan in paths along the blank 21, i.e. along its direction of transportation, and each transducer is rotatably switchable through 180° to alternatively scan the upper or the lower side of the blank 21. The actual transducers are shown at 25 and 26. They are arranged at the arms 27, 28, which are rotatably journalled and mounted on transportable carriages in square tubes 29, 20, or on guides in these tubes. The tube/tubes 29,20 may, of course, have a different cross section, such as circular, and the arm can be moved along a slit in the tube which may be covered by means of a strip which is movable by the arm.

In Figure 5 the arrow 32 designates the moving direction of the arm and the arrow 33 designate the adjustability of the transducer manipulator and thus the arm with the transducer.

6 Figure 6 shows the following:

A transducer 25 is placed at the end of a rotating arm 27, which is transportable in a slit in a square tube 29. The arm 27 is rotatably journalled inside the tube 29 and the transducer 25 can be rotated from a scanning position at the lower side of the blank 21 (see Figure 6) to a position at the upper side of the blank 21 and vice versa.

Lateral transportation of the tube 29, with the transducer manipulator can be performed by means of the chain driven member 35. The turning device is shown at 36, and 37 designates an operating member. As can be seen, the tube 29 is heat-insulated. A covering strip can be used for covering the slit 34.

The numeral 28a designates a transducer for scanning the side surface of the blank 21. The transducer 28a is connected to the arm 27, or separated therefrom, at the tube 29.

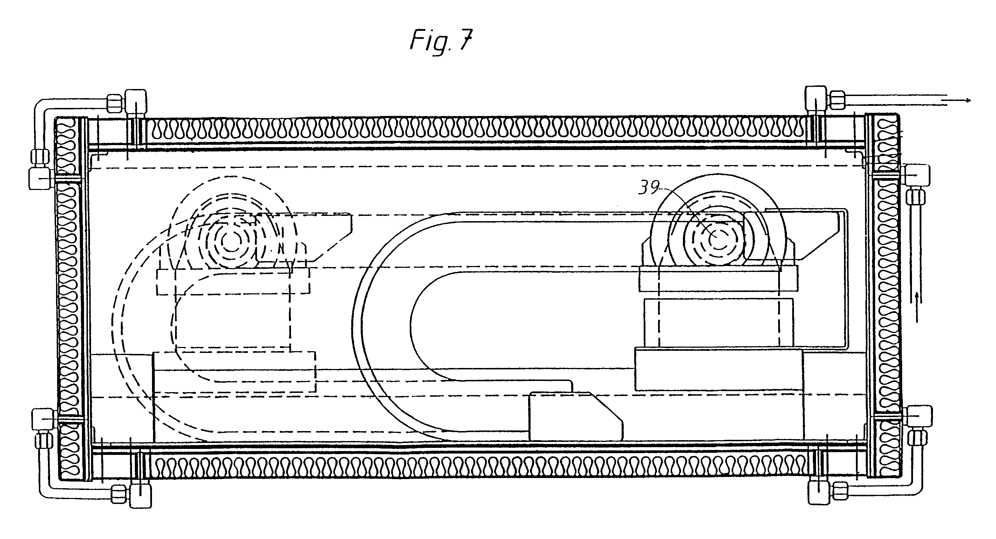

Figure 7 shows the tube in longitudinal section with a carriage 39 for an operating arm/transducer. The length of the tube determines the area of movement of the transducer in the longitudinal direction of the blank.

In further development of the invention it is, of course, also possible to arrange two or more transducers in the tube 4 or 28 spaced apart from each other so that each transducer scans only part of the width of the blank. Thus the overall degree of coverage of the scanned area will be increased. It is clear that in such a case, when using for example two transducers, the stroke of the movement is reduced to half its length.

The invention can be varied in many ways within the scope of the following claims.

## Claims

1. Manipulator for transducers (detectors) for indication of cracks and the like on hot blanks, such as slabs and blooms, said transducers being movable across or along the blank, **characterized** in that the transducer (11,25,26) is driven across or along the blank (2,21) by means of a carriage, a slide, or other transducer carrier means (13) which is placed inside or adjacent to a tube (4) extending across or along the blank and being raisable and lowerable relative to the blank.

2. Manipulator according to claim 1, **characterized** in that the transducer (1) is placed outside the tube (4) and connected to the carriage by means of a supporting arm (12) in the form of a tube or the like, passing through a longitudinal slit (14) in the tube (4).

3. Manipulator according to claim 1 or 2, **characteried** in that the slit (14) is covered with a thin strip (15) or the like, to prevent the penetration of dirt, etc., into the interior of the tube which surrounds the carriage (13).

4. Manipulator according to claim 3, **characterized** in that the strip (15) is connected to the tube/the cable between the transducer and the carriage and is movable with the transducer movements.

5. Manipulator according to any of the preceding claims, **characterized** in that the tube is provided with at least one insulating layer (9).

6. Manipulator according to any of the preceding claims, characterized in that the length of stroke of the transducer movement is adjustable.

7. Manipulator according to any of the preceding claims, **characterized** in that the transducer, the carriage and the transversely extending tube are rotatable through substantially 180° in such a way that the scanning means can be switched from a position scanning one side of the blank to a position for scanning the opposite side of the blank, for example between two roller/rolls (1) in a blank roller conveyor.

8. Manipulator according to any of claims 1, 2 and 5 to 7, **characterized** in that the slit (14) in the transversely extending tube (4) is covered with a ceramic layer, the transducer being placed inside said tube.

9. Transducer manipulator according to claim 8, **characterized** in that the ceramic layer is adapted to be cooled by liquid or gas.

10. Manipulator according to claim 1, **characterized** in that the transducer is placed on a supporting arm (27, 28) mounted on a rotating device (26) for rotating the supporting arm, for example through an angle of 180°, for example for alternative scanning of the lower side or the upper side of the blank (21).

11. Manipulator according to claim 10, **characterized** in that the rotating device (26) is placed inside the tube (29, 20).

12. Manipulator according to any of claims 1, 10 and 11, **characterized** in that the longitudinal movement is limited to a certain distance, for example between two rollers in a roller conveyor.

13. Manipulator according to any of claims 1 and 10-12, **characterized** in that an additional transducer (28a) is located at the carriage (39) for scanning of the narrow side of the blank, facing the carriage etc.

14. Manipulator according to any of claims 1 and 11-13, **characterized** in that the transducer with associated means is placed on both sides of the blank, for example for scanning, possibly simultaneously, of the lower side and the upper side of the blank, possibly also the short side surfaces on both sides.

15. Manipulator according to claim 1 and 11-14, **characterized** in that the supporting arm consists of an angled arm (27), the part of which, placed in or near the tube, is rotated by means of a rotating device (36) and the outer part of which supports the transducers.

16. Manipulator according to any of claims 1 and 11-15, **characterized** in that the tube (29, 20) has a square section and that the carriage (39) is movable inside the tube (29, 20) or, alternatively, that a slide or other transducer carrier is slidable along the tube.

17. Manipulator according to any of claims 1, and 11-16, **characterized** in that the tube is also transportable to and from the blank.

18. Manipulator according to any of the preceding claims, **characterized** in that the tube (4,29), which extends transversely to or in the direction of the blank, is provided with means for water cooling (10), completely or partially surrounding the tube.

19. Manipulator according to any of the preceding claims, characterized in that two or more transducers are arranged at a fixed distance from each other directly or with their supporting arms in the same tube (4, 29).

Fig. 1a

Fig. 1

Fig. 2

Fig. 3

EP 0 390 009 A1

## Fig. 4

## Fig. 5

EP 0 390 009 A1

Fig. 6

EP 0 390 009 A1

Fig. 7

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| A | US-A-4 041 379 (P-O KARLSSON)<br>* Abstract * | 1-19 | G 01 N 27/82<br>21/88<br>29/04<br>B 21 C 51/00 |
| A | EP-A3-0 153 565 (KAWASAKI STEEL CORPORA-TION, FUTEC INCORPORATED)<br>* Abstract * | 1-19 | |
| A | GB-A-2 066 482 (ESTEL HOESCH WERKE AG)<br>* Figure 3 * | 1-19 | |
| A | SE-8-453 946 (TÖRNBLOMS KVALITETSKONTROLL AB)<br>* Page 1, lines 1-18 * | 1-19 | |

| | | | TECHNICAL FIELDS SEARCHED (Int Cl 4) |
|---|---|---|---|
| | | | G 01 N<br>B 21 C |

The present search report has been drawn up for all claims

| Place of search | Date of completion of the search | Examiner |
|---|---|---|
| STOCKHOLM | 02-07-1990 | SÄFSTEN K. |